# EUROPEAN PATENT SPECIFICATION

(11) **EP 3 072 756 B1**
(45) Date of publication and mention of the grant of the patent: **09.05.2018**
(21) Application number: 16161417.7
(22) Date of filing: 21.03.2016
(51) Int. Cl.: B60S 1/40

(54) **CONNECTOR ELEMENT FOR CONNECTING TOGETHER WINDSCREEN WIPER BLADES AND THEIR OPERATING ARMS**
VERBINDUNGSELEMENT ZUR VERBINDUNG VON SCHEIBENWISCHERBLÄTTERN MIT DEREN BETÄTIGUNGSARMEN
ÉLÉMENT DE RACCORD POUR RACCORDER ENSEMBLE DES LAMES D'ESSUIE-GLACE ET LEURS BRAS DE MANOEUVRE

(30) Priority: 24.03.2015 CN 201520167725 U
(43) Date of publication of application: 28.09.2016
(73) Proprietor: Cartix S.r.l., 20123 Milano (IT)
(72) Inventor: WU, Zhengzhu, 20123 Milano (IT)
(74) Representative: Raimondi, Margherita

(56) References cited:
- WO-A1-2005/102802
- US-A1- 2013 152 324
- US-A1- 2013 167 317
- US-A1- 2014 259 505

## Description

The present invention relates to a connector element for connecting together windscreen wiper blades and their operating arms.

It is known, in the technical sector relating to the production and distribution of windscreen wipers for vehicles, the blades of which must be connected to associated operating arms which can be mounted on the vehicle, that said arms have ends formed with different shapes which result in the need for differently designed intermediate connectors with corresponding engaging elements, normally comprising a transverse pin, which is fixed to the blade and designed to allow engagement/disengagement for mounting/replacement of said blade.

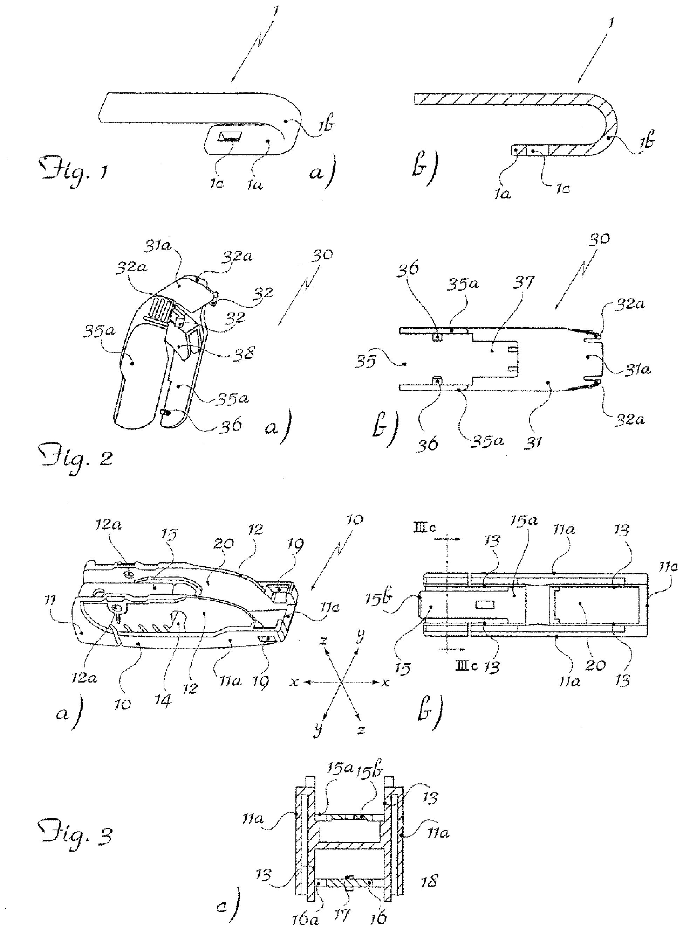

A particular example of this situation consists of the arms known in the sector as "hook arms" which have a free end for engagement with the blade formed in the manner of a claw or hook folded over towards the windscreen; an example of these arms 1 is shown in schematic form in Fig. 1 with the sole free end part 1b folded downwards so as to form a flange 1a which, depending on its length in the longitudinal direction, may or may not have a vertical through-hole 1c.

Correspondingly, intermediate arm/blade connectors are also known, these however, while performing their function, having the drawback that they have a complicated structure and are not easy or straightforward to use for the end user. Document WO 2005 102802 A discloses a connector element for hook shaped arms according to the preamble of claim 1.

The technical problem which is posed, therefore, is that of providing an intermediate connector element for connecting together the hook-type operating arms of windscreen wiper blades and said blades, which is able to provide a solution to the problems of the prior art.

In connection with this problem it is also required that this connector element should have small dimensions, be easy and inexpensive to produce and assemble and be able to fitted/removed with ease by any user, including non-specialized users.

These results are obtained according to the present invention by a connector element for hook-type operating arms of windscreen wiper blades according to the characteristic features of Claim 1.

Further details may be obtained from the following description of a non-limiting example of embodiment of the subject of the present invention, provided with reference to the accompanying drawings, in which:
Figure 1a,1b: show respectively a perspective view and a schematic view of the end part of a hook arm according to the prior art for operating windscreen wiper blades;
Figure 2a,2b: show respectively a perspective view and a view from above of the connector element according to the present invention;
Figures 3a, 3b and 3c: show respectively a perspective view, view from below and cross-sectional view of the connector body according to the present invention;
Figures 4a, 4b: show a perspective view of the assembled connector element open and closed, respectively;
Figure 5: shows a cross-section along the plane indicated by V-V in Fig.4b;
Figure 6: shows a cross-sectional view of the sequence for assembling the connector element on the operating arm.

As shown and assuming solely for the sake of convenience of description and without a limiting meaning a set of three reference axes, i.e. in a longitudinal direction X-X, corresponding to the lengthwise dimension of the connector element; transverse direction Y-Y, corresponding to the widthwise dimension of the connector element; and vertical direction Z-Z, perpendicular to the other directions and corresponding to the heightwise dimension, as well as a distal front part, far from the operating arm, and a proximal rear part, close to the operating arm, the connector element according to the invention comprises essentially:
- a body 10 which has
   - a substantially parallelepiped base 11 of limited height in the vertical direction Z-Z;
   two vertical walls 12 extend from the base 11, being arranged along the opposite, inner, longitudinal edges of said base; a through-hole 12a with a transverse axis is provided in a suitable longitudinal and vertical position of each wall 12 so that the two holes are coaxial with each other;

In its bottom part (Fig. 3b) the base 11 has two further partitions 13 extending parallel to the longitudinal direction X-X at a distance from the longitudinal edge 11a of the base 11 so as to form an interspace 13a designed to receive corresponding flanges of the windscreen wiper blade provided with a transverse pin (details not shown) for engagement with the slot 14 formed in the vertical walls 12 of the connector element.

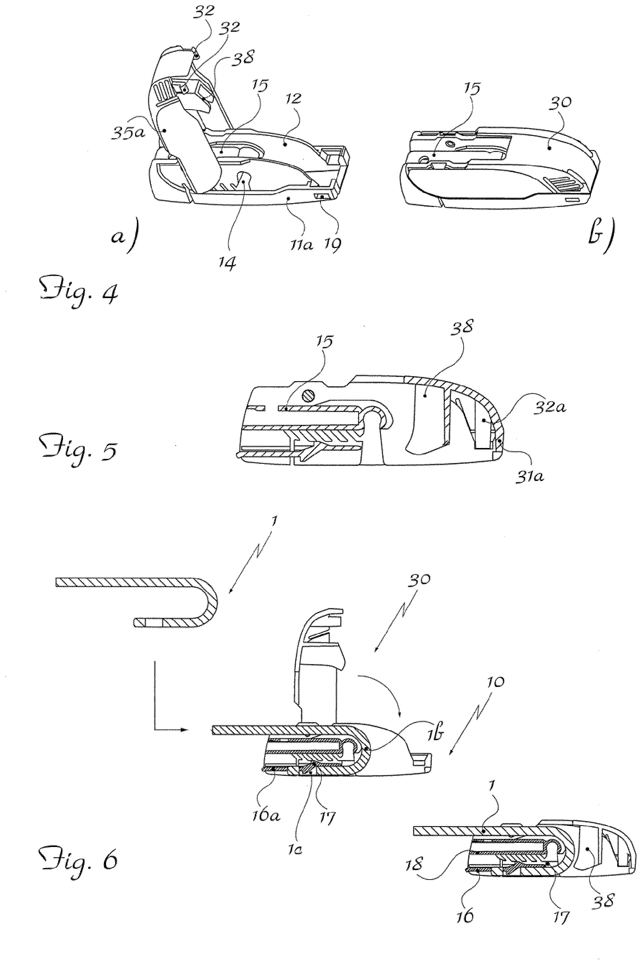

In its rear part (Fig. 3c) the body 10 has:
- an optional upper tongue 15 extending in the longitudinal direction X-X, from a transverse axis 15a where it is fixed to the walls 12, as far as a rear part of the body 10 where the upper tongue terminates in its free end 15b;
- a bottom tongue 16 in turn fixed to the opposite walls 12 along an axis 16a, situated lower in the vertical direction Z-Z than the fixing axis 15a of the first upper tongue 15;
in a suitable longitudinal position the bottom tongue 16 has a tooth 17 extending outwards and towards the upper tongue 15 in the vertical direction Z-Z;
conveniently the bottom tongue 16 had elasticity characteristics for allowing elastic deformation in the vertical direction Z-Z relative to the fastening axis;
- a transverse partition 18 (Fig. 3c) fixed to the vertical walls 12 and arranged in the vertical direction Z-Z between the upper tongue 15 and the bottom tongue 16;
- a seat 19 open on each longitudinal edge 11a of the base 10 in the vicinity of its front end;
- an empty space 20 formed in the front part of the body 10 and comprised between the vertical walls 12, the inner ends of the upper and bottom tongues 15, 16 and the front edge 11c of the base 11;
   - a cover 30 which has
- a curved, solid, front part 31 with an outer convexity and front flange 31a;
- a tooth 32 arranged at the front of the cover and on both sides of the front flange 31a; the tooth 32 is directed outwards in the transverse direction Y-Y and is formed on a protruding lug 32a of the cover 30; the protruding lug 32a has a suitable elasticity for allowing elastic deformation in the transverse direction Y-Y so as to displace correspondingly the tooth 32 from a stable rest position into an unstable position offset towards the inside of the cover;
- a presser piece 38 extending outwards from the inner surface of the solid part 31 of the cover;
- an open rear part 35 bounded by two arms 35a extending in the longitudinal direction X-X;
- each arm 35a has a pin 36 extending inwards in the transverse direction Y-Y and with an external diameter such as to allow insertion inside the corresponding hole 12a of the body 10, as will become clearer below;
- an intermediate space 37 situated between the arms 35a is thus formed in the said open rear part. Once the connector has been assembled, with the cover 30 mounted on the body 20 by means of insertion of the pins 36 of the former inside the holes 12a of the latter, the connector may be converted from a condition where the cover is open (Fig. 4a) to a condition where the cover is closed (Fig. 4b).

With this configuration operation of the connector according to the invention is as follows (Fig. 5):
- starting from an open condition of the cover 30 the end 1b of the operating arm 1 is inserted inside the volume comprised between the open space 37 of the cover 30 and the upper tongue 15 (if present) of the body 10 until the free end of the flange 1a of the arm passes beyond the slot 12a;
- the said flange 1a is moved downwards in the vertical direction Z-Z so that it is arranged in line with the inner opening of the space defined by the bottom tongue 16 and the transverse partition 18;
- the arm 1 is pulled in the longitudinal direction X-X outwards; during its displacement the flange 1a comes into contact with the tooth 17 producing a downwards pushing action on the bottom tongue 16 which, deforming elastically, allows the flange 1a to pass over the bottom tongue 16;
- once it has reached the end of its travel, the flange 1a arranges its hole 1c opposite the tooth 17 which, since it is no longer retained by the solid part of the flange, allows the elastic return of the bottom tongue 16 into position and therefore the entry of the tooth 17 inside the hole 1c, ensuring stable retention of the arm/connector connection in the longitudinal direction.
- the cover 30 is rotated until the front teeth 32 engage with the respective seats 19 in the base 11 and the connector is therefore stably closed.
- in the closed condition of the cover the presser piece 38 acts, axially, on the folded part 1b of the operating arm, helping ensure the stable retention thereof in the longitudinal direction; while the solid part of the cover keeps the arm in position in the vertical direction Z-Z, with the flange 1a in position above the bottom tongue 16.

Preferably, each for the two vertical walls 12 of body 10 is provided with a row of inclined holes for providing elasticity to the walls 12 during installation of the wiper arm, and for better retention thereof when the cover is closed.

It is therefore clear how the connector element according to the invention is simple and inexpensive to produce and assemble and able to make the operation of inserting/extracting the connector element into/from the operating arm particularly easy and straightforward, while ensuring a stable and reliable relative connection. Although described in connection with a number of embodiments and a number of preferred examples of embodiment of the invention, it is understood that the scope of protection of the present patent is defined solely by the claims below.

## Claims

1. Connector element for hook-type operating arms (1,1a,1b) of windscreen wiper blades, comprising:
- a body (10) which has
. a substantially parallelepiped base (11) of a certain height in the vertical direction (Z-Z);
. a vertical wall (12) arranged along each of the opposite, inner, longitudinal edges of the base (11); a through-hole (12a) with transverse axis being provided in a suitable longitudinal and vertical position of each wall (12) so that the two holes are coaxial with each other;
. a bottom tongue (16), the inner end of which is fixed in the transverse direction (16a) to the opposite vertical walls (12), said tongue having a tooth (17) extending outwards on the opposite side to the base (11);
the connector element being **characterised in that** it further comprises:
. a seat (19) open on each longitudinal edge (11a) of the base (10) in the vicinity of its front end;
. an empty space (20) which is formed in the front part of the body (10), comprised between the vertical walls (12), the inner end of the bottom tongue (16) and the front edge (11c) of the base (11) and is designed to receive the free end (1b) of the operating arm (1);
- a cover (30) which has
. a curved, solid, front part (31) with an outer convexity and front flange (31a);
. a tooth (32) arranged on both sides of the front flange (31a) and suitable for engagement with the corresponding seat (19) of the base (11); the tooth (32) being directed outwards in the transverse direction (Y-Y) and being formed on a protruding lug (32a) of the cover (30), which has a suitable elasticity for allowing elastic deformation in the transverse direction (Y-Y) so as to displace correspondingly the tooth (32) from a stable rest position into an unstable position offset towards the inside of the cover;
. a presser piece (38) extending outwards from the inner surface of the solid part (31) of the cover;
. an open rear part (35) bounded by two arms (35a) extending in the longitudinal direction (X-X);
. each arm (35a) has a pin (36) extending inwards in the transverse direction (Y-Y) and with an external diameter such as to allow insertion inside the corresponding hole (12a) of the body (10);
and **in that**
when the cover is open, the connector has an open volume comprised between the arms (35) of the said cover and the vertical walls (12) of the body (10) and suitable for insertion of the arm (1) parallel to the longitudinal direction (X-X) and for receiving the flange (1a) of the arm (1) in an upper position with respect to the bottom tongue (16) .

2. Connector element according to Claim 1, **characterized in that** the base (11) has two partitions (13) extending parallel to the longitudinal direction (X-X) at a distance from the longitudinal edge (11a) of the base (11) such as to form an interspace (13a).

3. Connector element according to Claim 1 **or 2, characterized in that** said base (11) has an upper tongue (15) extending in a longitudinal direction (X-X) from a transverse axis (15a), where it is fixed to the walls (12), as far as a rear part of the body (10).

4. Connector element according to claim 1, 2 or 3, **characterized in that** each of the two vertical side walls (12) of the body (10) is provided with a row of inclined holes for providing elasticity to the wall (12) during installation of the wiper arm.

## Patentansprüche

1. Verbindungselement für hakenartige Wischerarme (1, 1a, 1b) von Scheibenwischerblättern, umfassend:
- einen Körper (10), welcher aufweist:
eine im Wesentlichen parallelepipedische Basis (11) mit in vertikaler Richtung (Z-Z) bestimmter Höhe;
eine vertikale Wand (12), welche entlang der jeweils gegenüberliegenden inneren, longitudinalen Kanten der Basis (11) angeordnet ist;
ein Durchgangsloch (12a) mit transversaler Achse, welche in einer geeigneten longitudinalen und vertikalen Position einer jeden Wand (12) derart vorgesehen ist, dass die zwei Löcher koaxial zueinander sind;
eine untere Zunge (16), deren inneres Ende (16a) in transversaler Richtung an den gegenüberliegenden vertikalen Wänden (12) befestigt ist, wobei die genannte Zunge auf der der Basis gegenüberliegenden Seite einen sich nach außen erstrekkenden Zahn (17) aufweist;
**dadurch gekennzeichnet, dass** das Verbindungselement weiter umfasst:
- einen Sitz (19), der an jeder longitudinalen Kante (11a) der Basis (10) in der Nähe ihres vorderen Endes offen ist;
- einen Leerraum (20), welcher in dem vorderen Teil des Körpers (10) gebildet wird, umgeben von den vertikalen Wänden (12), dem inneren Ende der unteren Zunge (16) und der Vorderkante (11c) der Basis (11), und ausgebildet ist, das freie Ende (1b) des Wischerarms (1) aufzunehmen;
- eine Abdeckung (30), welche aufweist:
einen gekrümmten, soliden, vorderen Teil (31) mit einer äußeren Konvexität und einem vorderen Flansch (31a);
einen Zahn (32), welcher auf beiden Seiten des vorderen Flansches (31a) angeordnet ist und zum Eingriff mit dem entsprechenden Sitz (19) der Basis (11) geeignet ist, wobei der Zahn (32) in transversaler Richtung (Y-Y) nach außen gerichtet ist und an einer vorstehenden Nase (32a) des Deckels (30) ausgebildet ist, welche eine geeignete Elastizität aufweist, um eine elastische Verformung in der transversalen Richtung (Y-Y) zu ermöglichen, um den Zahn (32) entsprechend von einer stabilen Ruhelage in eine instabile Lage hin zur Innenseite der Abdeckung zu versetzen;
ein Druckstück (38), welches sich von der inneren Oberfläche des soliden Teils (31) der Abdeckung nach außen erstreckt;
ein offener hinterer Teil (35), der durch zwei Arme (35a) begrenzt ist, die sich in die longitudinale Richtung (X-X) erstrecken;
wobei jeder Arm (35a) einen Stift (36) aufweist, der sich in die transversale Richtung (Y-Y) nach innen erstreckt und einen solchen Außendurchmesser aufweist, dass ein Einsetzen in das entsprechende Loch (12a) des Körpers (10) ermöglicht wird;
**und dadurch, dass**
wenn die Abdeckung offen ist, der Verbinder ein offenes Volumen aufweist, das von den Armen (35) der genannten Abdeckung und den vertikalen Wänden (12) des Körpers (10) umgeben ist und zum Einsetzen des Arms (1) parallel zu der longitudinalen Richtung (X-X) und zum Aufnehmen des Flanschs (1a) des Arms (1) in einer oberen Position in Bezug auf die untere Zunge (16) geeignet ist.

2. Verbindungselement nach Anspruch 1, **dadurch gekennzeichnet, dass** die Basis (11) zwei Trennwände (13) aufweist, die sich entlang zu der longitudinalen Richtung (X-X) in einem Abstand von der longitudinalen Kante (11a) der Basis (11) erstrecken, um einen Zwischenraum (13a) zu bilden.

3. Verbindungselement nach Anspruch 1 oder 2, **dadurch gekennzeichnet, dass** die genannte Basis (11) eine obere Zunge (15) aufweist, die sich in einer longitudinalen Richtung (X-X) von einer transversalen Achse (15a) aus, wo sie an den Wänden (12) befestigt ist, bis zu einem hinterem Teil des Körpers (10) erstreckt.

4. Verbindungselement nach Anspruch 1, 2 oder 3, **dadurch gekennzeichnet, dass** jede der zwei vertikalen Seitenwände (12) des Körpers (10) mit einer Reihe von geneigten Löchern versehen ist, um der Wand (12) während der Installation des Wischerarms Elastizität zu verleihen.

## Revendications

1. Elément connecteur de bras de mise en oeuvre de type à crochet (1, 1a, 1b) de lames de balais d'essuie-glace, comprenant :
- un corps (10) qui comporte
. une base (11) sensiblement parallélépipède ayant une certaine hauteur dans la direction verticale (Z-Z) ;
. une paroi verticale (12) agencée le long de chacun des bords longitudinaux intérieurs opposés de la base (11) ; un trou traversant (12a) dont l'axe transversal se trouve dans une position longitudinale et verticale appropriée de chaque paroi (12) de sorte que les deux trous soient coaxiaux l'un par rapport à l'autre ;
. une languette inférieure (16), dont l'extrémité intérieure est fixée dans la direction transversale (16a) aux parois verticales (12) opposées, ladite languette comportant une dent (17) s'étendant vers l'extérieur du côté opposé à la base (11) ;
l'élément connecteur étant **caractérisé en ce qu'**il comprend en outre :
. un siège (19) ouvert sur chaque bord longitudinal (11a) de la base (10), à proximité de son extrémité avant ;
. un espace vide (20) formé dans la partie avant du corps (10), compris entre les parois verticales (12), l'extrémité intérieure de la languette inférieure (16) et le bord avant (11c) de la base (11), et conçu pour recevoir l'extrémité libre (1b) du bras de mise en oeuvre (1) ;
- un élément de recouvrement (30) comportant
. une partie avant (31) solide, courbée ayant une convexité extérieure et possédant un rebord avant (31a) ;
. une dent (32) agencée des deux côtés du rebord avant (31a) et appropriée pour une coopération avec le siège (19) correspondant de la base (11) ; la dent (32) étant orientée vers l'extérieur dans la direction transversale (Y-Y) et étant formée sur un ergot (32a) en saillie de l'élément de recouvrement (30), ayant une élasticité appropriée pour permettre une déformation élastique dans la direction transversale (Y-Y) de façon à assurer un déplacement correspondant de la dent (32) d'une position d'appui stable à une position instable décalée vers l'intérieur de l'élément de recouvrement ;
. une pièce d'application de pression (38) s'étendant vers l'extérieur de la surface intérieure de la partie solide (31) de l'élément de recouvrement ;
. une partie arrière ouverte (35) délimitée par deux bras (35a) s'étendant dans la direction longitudinale (X-X) ;
. chaque bras (35a) comportant un plot (36) s'étendant vers l'intérieur dans la direction transversale (Y-Y) et ayant un diamètre extérieur permettant une introduction à l'intérieur du trou correspondant (12a) du corps (10) ;
et **en ce que**
lorsque l'élément de recouvrement est ouvert, le connecteur comporte un volume ouvert compris entre les bras (35) dudit élément de recouvrement et les parois verticales (12) du corps (10), et approprié pour une introduction du bras (1) parallèlement à la direction longitudinale (X-X) et pour recevoir le rebord (1a) du bras (1) dans une position supérieure par rapport à la languette inférieure (16) .

2. Elément connecteur selon la revendication 1, **caractérisé en ce que** la base (11) comporte deux cloisons (13) s'étendant parallèlement à la direction longitudinale (X-X) à une certaine distance du bord longitudinal (11a) de la base (11) de façon à former un espace intermédiaire (13a) .

3. Elément connecteur selon la revendication 1 ou 2, **caractérisé en ce que** ladite base (11) comporte une languette supérieure (15) s'étendant dans une direction longitudinale (X-X) à partir d'un axe transversal (15a), où elle est fixée aux parois (12), dans la même mesure qu'à une partie arrière du corps (10).

4. Elément connecteur selon la revendication 1, 2 ou 3, **caractérisé en ce que** chacune des deux parois latérales verticales (12) du corps (10) est pourvue d'une rangée de trous inclinés destinés à donner une certaine élasticité à la paroi (12) pendant l'installation du bras d'essuie-glace.
